(19) Europäisches Patentamt
European Patent Office
Office européen des brevets

(11) EP 0 718 369 A1

# (12) EUROPEAN PATENT APPLICATION

(43) Date of publication:
26.06.1996 Bulletin 1996/26

(51) Int Cl.$^6$: **C08L 83/04**, C08K 5/54

(21) Application number: **95308487.8**

(22) Date of filing: **27.11.1995**

(84) Designated Contracting States:
**DE FR GB**

(30) Priority: **22.12.1994 US 362071**
**31.07.1995 US 509479**

(71) Applicant: **DOW CORNING CORPORATION**
**Midland Michigan 48686-0994 (US)**

(72) Inventor: **Lower, Loren D.**
**Midland, Michigan (US)**

(74) Representative: **Dowden, Marina**
**Elkington and Fife**
**Prospect House,**
**8 Pembroke Road**
**Sevenoaks, Kent TN13 1XR (GB)**

Remarks:
A request for correction of the description has been filed pursuant to Rule 88 EPC. A decision on the request will be taken during the proceedings before the Examining Division (Guidelines for Examination in the EPO, A-V, 3.).

## (54) Method of reducing hot hydrocarbon oil swell of filled silicone sealant gaskets

(57) A method of making a gasket from a room temperature vulcanizable silicone sealant composition containing a hydroxyl endblocked polydimethylsiloxane; calcium carbonate or a combination of calcium carbonate and reinforcing silica filler, a specifically selected ketoximosilane crosslinker combination such as vinyltriketoximosilane and methyltriketoximosilane and a catalyst. The gasket has a reduced swell in hot hydrocarbon oil and cures rapidly enough to be used on an automated production line for formed-in-place gaskets.

EP 0 718 369 A1

## Description

This invention relates to a method of forming gaskets from selected silicone sealant compositions containing filler and a ketoximosilane crosslinker. The product gaskets have reduced hot hydrocarbon oil swell compared to those made from compositions containing vinyltriketoximosilane as a crosslinker.

Silicone compositions which cure at room temperature when exposed to atmospheric moisture, known as RTV's, find broad utility as sealants for many industries, such as construction, highway and automotive, among others. In the automotive industry, the use of silicone sealants to form gaskets is known. For this invention, those gaskets which come into contact with hot hydrocarbon oils are of particular interest. Such gaskets need the ability to maintain their sealing property while in contact with hot hydrocarbon oils at temperatures of greater than 100°C. for periods of time such as hours and then see such conditions repeatedly.

One type of gasket which uses silicone sealant compositions (RTV's) is formed-in-place gaskets (known as FIPG). Such gaskets, if used in and around internal combustion engines, such as automobile engines, need to have a resistance to hot hydrocarbon oils to function properly over extended time periods. EPA 0050453, published April 28, 1982, describes gasket materials with improved hot hydrocarbon oil resistance. These RTV compositions were made from linear polyorganosiloxanes having at least 0.5 percent of the total organic groups as alkenyl radicals; filler, silane or polysiloxane which contained at least one aminoalkyl radical and at least one silicon-bonded alkoxy radical or aminoalkoxy radical; a silicon compound having at least three silicon-bonded organic moisture-hydrolyzable radicals and optionally a catalyst. We have found that the presence of aminoalkyl containing silicon compounds is actually detrimental to hot hydrocarbon oil resistance and they need to be excluded from those compositions which are used as automotive engine gaskets.

US-A 4,514,529, issued April 30, 1985, discloses compositions which are particularly useful as FIPG, are low modulus, one component, RTV silicone elastomers. These compositions are made from devolatilized silanol terminated diorganosiloxane base polymer, optionally a devolatilized plasticizer, oxime crosslinking agent, an organotin catalyst, and a hydrophobic calcium carbonate filler which has a low total water content. These compositions have less than 40 percent decrease in tensile strength after two weeks immersion in engine fill oil at 148.9°C. (300°F). Reportedly, vinyltri (methylethylketoximo)silane provides better hot oil resistance than methyltri(methylethylketoximo)silane when used with a low water content hydrophobic calcium carbonate as a filler. We have unexpectedly found that certain combinations of ketoximosilanes in sealant formulations will provide improved oil swell when compared to the use of vinyltri (methylethylketoximo)silane alone.

US-A 4,657,967, issued April 14, 1987, claims a one package RTV composition which is useful as a FIPG with solvent and oil resistance in automobiles. These compositions comprise hydroxyl endblocked polydiorganosiloxane and, as crosslinker, a tetrafunctional ethoxyketoximo silane mixture of 0 to 80 weight percent tetraketoximosilane, 20 to 70 weight percent monoethoxytriketoximosilane, 1 to 60 weight percent diethoxydiketoximosilane, and 0 to 20 weight percent triethoxymonoketoximosilane, where the ketoximo groups have a formula -O-N=CR'R' in which R' is an alkyl group of 1 to 4 carbon atoms and there is at least 0.8 moles of tetrafunctional ethoxyketoximosilane per mole of hydroxyl groups on the polydiorganosiloxane. Filler can also be present such as reinforcing silica, calcium carbonate and mixtures thereof. Further, adhesion promoters can be present such as $H_2NCH_2CH_2NHCH_2CH_2CH_2Si(OCH_3)_3$ and

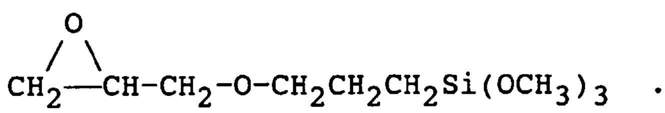

Also, catalysts for more rapidly curing those compositions can include the non-reversion curing catalysts such as the organotitanates. However, those catalysts which cause reversion, such as tin carboxylates and amines, should not be used.

US-A 4,673,750, issued June 16, 1987, reveals a sealant useful as FIPG in internal combustion engines and is described as a sealant having good oil resistance for an RTV silicone gasketing material. The auto-adhering one-component RTV silicone sealant contains a gylcidoxyalkyl substituted mixed alkoxyoxime silane as the adhesion promoter. This adhesion promoter is made by reacting a gylcidoxyalkyl alkoxysilane with an oximosilane crosslinker. The patentee does not report any oil resistant properties. Another sealant composition is described in US-A's 4,735,979, issued April 5, 1988 and 4,847,396, issued July 11, 1989. In these patents, the sealant compositions are described as having outstanding adhesion, even for oil contaminated metals, and also as including excellent oil-resistant properties at elevated temperatures. The adhesion promoter has the following formula

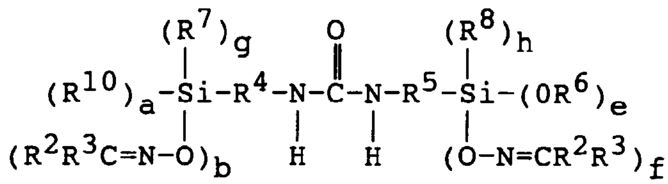

where $R^1$ and $R^6$ are independently a non-aromatic hydrocarbyl or halo substituted hydrocarbyl group or a carboxyalkyl group having from 1 to 10 carbon atoms. $R^2$, $R^3$, $R^7$, and $R^8$ are independently H, hydrocarbyl or halohydrocarbyl, either of which may be aromatic or non-aromatic or carboxyalkyl having 1 to 10 carbon atoms. $R^4$ and $R^5$ are divalent hydrocarbon or halohydrocarbon groups of 1 to 20 carbon atoms. The subscripts $\underline{a}$, $\underline{b}$, $\underline{f}$, and $\underline{e}$ are independently 0-3, $\underline{g}$ and $\underline{h}$ are 0 or 1, and $\underline{a} + \underline{b} + \underline{g} = \underline{f} + \underline{e} + \underline{h} = 3$.

US-A 4,973,623, issued November 27, 1990, relates to RTV compositions which cure fast and have good reversion resistance that are made from a mixture of 66.75 to 89.4 weight percent of a hydroxyl endblocked polydiorganosiloxane; 5.5 to 10 weight percent of a tetrafunctional ethoxyketoximo silane mixture having from 6 to 27 weight percent tetraketoximosilane, 9 to 39 weight percent monoethoxytriketoximosilane, 38 to 60 weight percent diethoxydiketoximosilane and 5.5 to 25 weight percent triethoxymonoketoximosilane; 0.1 to 0.25 weight percent of a tin catalyst; 0 to 3 weight percent of an adhesion promoter, especially distilled aminoalkyl functional silanes and 5 to 20 weight percent of reinforcing silica. These RTV compositions, because of their resistance to oils and other solvents such as glycol and water mixtures, find utility as FIPG for automobiles.

US-A 5,013,781, issued May 7, 1991, pertains to a gasket material which exhibits excellent adhesiveness to substrates and resistance to degradation of properties when exposed to hot hydrocarbon oils and coolants. These compositions contain polydimethylsiloxane; an organopolysiloxane having $R'_3SiO_{0.5}$ and $SiO_2$ units or $R'_3SiO_{0.5}$, $R'_2SiO$ and $SiO_2$ units; an inorganic filler; an alkoxysilane adhesion promoter; and a ketoxime silicon compound crosslinker. They teach that the presence of the organopolysiloxane having $R'_3SiO_{0.5}$ and $SiO_2$ units or $R'_3SiO_{0.5}$, $R'_2SiO$ and $SiO_2$ units, provides the improved resistance to hydrocarbon oils and coolants. The adhesion promoters are alkoxysilanes of many kinds which interact synergistically with the aforementioned organopolysiloxane. The adhesion promoter alkoxysilanes have, in addition to the alkoxy group, alkyl groups; alkenyl groups; oxime groups; epoxy groups; acryloxy groups and mercapto groups. The ketoxime crosslinker contains in each molecule at least three oxime groups bonded to silicon via the oxygen atom and are exemplified by methyltris(methylethylketoxime)silane, vinyltris(methylethylketoxime)silane, phenyltris(methylethylketoxime)silane, methyltris(diethylketoxime)silane and tetrakis(methylethylketoxime)silane. These silicon compounds are used singly or as a combination of two or more types. These materials have excellent resistance to hot hydrocarbon oil and coolant and they also find utility as gasketing materials for automobile engine oil pans, a headcover/gasket material for marine diesel engines, automobile transmission pans, rotary engines and automobile radiators. In their examples, the patentee shows that the organopolysiloxane having $R'_3SiO_{0.5}$ and $SiO_2$ units or $R'_3SiO_{0.5}$, $R'_2SiO$, and $SiO_2$ units is needed to provide the resistance to degradation of properties when exposed to hot hydrocarbon oils and coolants.

WO 9319130 published September 30, 1993, deals with an RTV composition which has improved oil resistance and adhesion. This RTV composition is a one-part system comprising 100 parts by weight of a silanol terminated diorganopolysiloxane; 3 to 25 parts by weight of silica filler; up to 80 parts by weight of calcium carbonate, up to 0.5 part by weight of a tin based catalyst, 2 to 15 parts by weight of a crosslinking agent including alkyl, alkenyl, vinyltris (dialkyl- or dialkenyl- or alkylalkenylketoximo)-silane, and 0.1 to 4 parts by weight of gamma-aminopropyl triethoxysilane adhesion promoter. We have found that the presence of gamma-aminopropyl triethoxysilane in silicone sealant compositions, which also contain oximosilanes as crosslinkers, should not be selected for use as gaskets when they will be brought into contact with hot hydrocarbon oil because their resistance is poorer than those which leave it out.

The present invention provides a method of reducing hot hydrocarbon oil swell of silicone sealant gaskets comprising

(I) forming a gasket shape from a silicone sealant composition consisting of a blend of the following ingredients, with the proviso that the blend excludes amino functional silicon compounds,

(A) 100 parts by weight of a polydimethylsiloxane having a viscosity measured at 25°C. of from 1 Pa·s to 300 Pa·s, and endblocking selected from silicon-bonded hydroxyl groups or a mixture of silicon-bonded hydroxyl groups and trimethylsiloxy units,

(B) 25 to 200 parts by weight, based on 100 parts by weight of (A), of a filler consisting of 25 to 200 parts by weight of calcium carbonate and 0 to 25 parts by weight of reinforcing silica,

(C) 5 to 25 parts by weight, based on 100 parts by weight of (A), of a crosslinker selected from the group consisting of

(a) a combination of 10 to 75 weight percent of vinyltriketoximosilane and 25 to 90 weight percent of methyltriketoximosilane where the combined weight of vinyltriketoximosilane and methyltriketoximosilane is 100 weight percent;

(b) a combination of 25 to 90 weight percent of vinyltriketoximosilane and 10 to 75 weight percent of tetraketoximosilane, where the combined weight of vinyltriketoximosilane and tetraketoximosilane is 100 weight percent;

(c) a combination of 25 to 90 weight percent of vinyltriketoximosilane, and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane where the combined weight of vinyltriketoximosilane and the tetrafunctional ethoxyketoximosilane mixture is 100 weight percent;

(d) a combination of 25 to 90 weight percent of methyltriketoximosilane and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane, where the combined weight of methyltriketoximosilane and the tetrafunctional ethoxyketoximosilane mixture is 100 weight percent;

(e) a combination of vinyltriketoximosilane, methyltriketoximosilane and a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane and 0 to 59 weight percent of tetraketoximosilane, where the methyltriketoximosilane is present in an amount of from 25 to 90 weight percent and the remainder of the combination is at least 1 weight percent vinyltriketoximosilane and at least 1 weight percent of the tetrafunctional ethoxyketoximosilane mixture where the combined weight of vinyltriketoximosilane, methyltriketoximosilane and the tetrafunctional ethoxyketoximosilane is 100 weight percent;

(f) a combination of 10 to 75 weight percent of vinyltriketoximosilane and 25 to 90 weight percent of a methyltri(methoxyketoximo)silane mixture consisting of 50 to 90 weight percent methyltriketoximosilane and 10 to 50 weight percent of methylmonomethoxydiketoximosilane, where the combined weight of vinyltriketoximosilane and the methyltri(methoxyketoximo)silane mixture is 100 weight percent;

(g) a combination of 10 to 75 weight percent of tetraketoximosilane and 25 to 90 weight percent of a methyltri(methoxyketoximo)silane mixture consisting of 50 to 90 weight percent of methyltriketoximosilane and 10 to 50 weight percent of methylmonomethoxydiketoximosilane, where the combined weight of the tetraketoximosilane and the methyltri(methoxyketoximo)silane mixture is 100 weight percent;

(h) a combination of 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane and 0 to 59 weight percent of tetraketoximosilane and 25 to 90 weight percent of a methyltri(methoxyketoximo)silane mixture consisting of 50 to 90 weight percent methyltriketoximosilane and 10 to 50 weight percent of methylmonomethoxydiketoximosilane, where the combined weight of the tetrafunctional ethoxyketoximosilane mixture and the methyltri(methoxyketoximo)silane mixture is 100 weight percent;

(i) a combination of 25 to 90 weight percent of methyltriketoximosilane and 10 to 75 weight percent of a vinyltri(methoxyketoximo)silane mixture consisting of 50 to 90 weight percent vinyltriketoximosilane and 10 to 50 weight percent vinylmonomethoxydiketoximosilane and where the combined weight of the methyltriketoximosilane and the vinyltri(methoxyketoximo)silane mixture is 100 weight percent;

(j) a combination of 10 to 75 weight percent of tetraketoximosilane and 25 to 90 weight percent of a vinyltri(methoxyketoximo)silane mixture consisting of 50 to 90 weight percent vinyltriketoximosilane and 10 to 50 weight percent of vinylmonomethoxydiketoximosilane and where the combined weight of the tetraketoximosilane and the vinyltri-(methoxyketoximo)silane mixture is 100 weight percent;

(k) a combination of 25 to 90 weight percent of a vinyltri(methoxyketoximo)silane mixture consisting of 10 to 50 weight percent vinylmonomethoxydiketoximosilane and 50 to 90 weight percent vinyltriketoximosilane, and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane, where the combined weight of the vinyltri(methoxyketoximo)silane and the tetrafunctional ethoxyketoximosilane mixture is 100 weight percent; and

(l) a combination of 10 to 75 weight percent of a vinyltri(methoxyketoximo)silane mixture consisting of 10 to 50 weight percent of vinylmonomethoxydiketoximosilane and 50 to 90 weight percent of vinyltriketoximosilane, and 25 to 90 weight percent of a methyltri(methoxyketoximo)silane mixture consisting of 50 to 90 weight percent of methyltriketoximosilane and 10 to 50 weight percent methylmonomethoxydiketoximosilane, where the combined weight of the vinyltri(methoxyketoximo)silane mixture and the tetrafunctional ethoxyketoximosilane

mixture is 100 weight percent;
(D) a catalytic quantity of a catalyst for curing a mixture of (A), (B) and (C) in an atmosphere containing moisture;
(E) 0 to 25 parts by weight, per 100 parts by weight of (A), of a trimethylsiloxy endblocked polydimethylsiloxane fluid having a viscosity measured at 25°C. of from 0.01 to 100 Pa·s;
(F) optionally a quantity of one or more of an additive selected from a group consisting of a thermal aging enhancer, a colorant, a flame retardant enhancer, a filler other than calcium carbonate and reinforcing silica, and an adhesion promoter and said additives do not reduce the hydrocarbon oil resistance; and
(G) 0 to 25 parts by weight per 100 parts by weight of (A) of a hydroxyl endblocked polydiorganosiloxane having a viscosity measured at 25°C. of less than 0.1 Pa·s and where the organo groups are methyl or a mixture of methyl and phenyl;
(II) exposing the silicone sealant composition in the shape of a gasket formed in (I) to moisture, curing the silicone sealant composition, and forming a cured silicone sealant gasket, wherein the curing gasket has a tack-free-time of less than 100 minutes, and the cured silicone sealant gasket has a reduced swell in hot hydrocarbon oils compared to a gasket made from an equivalent composition formulated with vinyltriketoximosilane as the sole crosslinker.

Gaskets for use in internal combustion engines, which come into contact with hot hydrocarbon oils can be made from one package, room temperature vulcanizable, silicone sealant compositions. Although the resulting gaskets are functional, there remains a need to further improve the resistance of these gaskets to hot hydrocarbon oils without increasing the cost, and more preferably by even reducing the cost.

We unexpectedly found that a key to increasing the resistance to hot hydrocarbon oil is the selection of a particular one package, RTV silicone sealant composition and its use for forming gaskets as further described in our step (I). After the sealant composition is formed into an appropriate shape for a gasket, it is exposed to moisture to cure it. This moisture is most conveniently atmospheric moisture. Our sealant composition is applied by forming the gasket in the location where it is to function as a seal. This process of forming gaskets is termed a formed-in-place-gasket (FIPG). The sealant composition is formed into the gasket shape by hand or by mechanical means which, in today's industry, is now often formed by a programmed computer applicator in a robotic application. The automated FIPG process is suitable for production lines in assembling automobiles. A gasket can also be formed by shaping our silicone sealant composition into a gasket shape, curing the resulting shaped article by exposure to moisture, and thereafter placing the cured, silicone sealant gasket between the substrates which are to be sealed, such as the surfaces within an automobile engine. Such pre-made gaskets would find utility as replacement gaskets. Although one could use the FIPG technique for replacing gaskets as they wear out, the pre-made gaskets are more suitable for particular applications, or they may be preferred by the user.

Our silicone sealant composition is shaped to form a gasket shape, such as on a substrate surface to be sealed with another substrate surface. The two substrate surfaces are mated with the gasket shaped silicone sealant composition therebetween. Gaskets are then formed by allowing the silicone sealant composition, now in a gasket shape, to come into contact with moisture and thereby cure. The gaskets made by this invention are designed to contact hot hydrocarbon oil during its function as a gasket, such as during the operation of an internal combustion engine. The substrates can be metal, such as iron, steel or aluminum; or other materials, such as vinyl esters and Viton™ which are used to make combustion engines and the other engine parts which need sealing and hot oil resistance.

Because production lines in the manufacture of engines and automobiles are designed to move rapidly, there is a further need to have silicone sealant compositions that cure rapidly enough so the appropriate sealing gasket is completely formed and will not become misshaped by further progress along the assembly line. Therefore, in addition to the requirement that the gasket exhibits resistance to hot hydrocarbon oils, it must also cure quickly enough to be used on assembly lines. The use of one package, RTV silicone sealant compositions, which are formulated with ketoximosilane crosslinkers, were found by us to provide particularly valuable properties for use as FIPG materials. In particular, those RTV silicone compositions which were formulated with vinyltriketoximosilane as the crosslinker were found to provide rapid cure and had respectable hot hydrocarbon oil resistance. However, it was unexpectedly found that the hot hydrocarbon oil resistance, as evidenced from the volume swell measurement after immersion in hot hydrocarbon oil at 150°C. for at least 7 days, could be further improved by the proper selection of certain combinations of ketoximosilane crosslinkers. This improved volume swell could be obtained while maintaining sufficiently rapid curing as evidenced from measurement of the tack-free-time. Therefore, by selecting a combination of ketoximosilane crosslinkers when formulating a one package RTV silicone sealant composition made with calcium carbonate filler, or a combination of calcium carbonate and reinforcing silica filler, the volume swell can be surprisingly reduced compared to an equivalently formulated one package RTV silicone sealant composition made using vinyltriketoximosilane as the sole crosslinker. These combinations of ketoximosilane crosslinkers also provide a sealant composition which cures rapidly, such that the tack-free-time is less than 100 minutes, and preferably less than 50 minutes. The cost of making the sealant compositions of this invention are also reduced because vinyltriketoximosilanes are expensive and a reduction in the amount used or eliminating them altogether will result in substantial savings. In addition, a corresponding reduction in the amount of reinforcing silica filler required also provides a substantial savings in the manufacture and use of our sealant compositions. An unexpected benefit is that cost reduction is accomplished while maintaining desirable properties of the uncured composition and the cured product within the selected ranges and at the same time increasing resistance to hot hydrocarbon oils.

The one package, RTV silicone sealant compositions used in this invention to produce the gaskets are selected from those formulated by blending (A) 100 parts by weight of a polydimethylsiloxane, (B) 25 to 200 parts by weight of a filler, (C) 5 to 25 parts by weight of a crosslinker which is selected from specific combinations as further described herein, (D) a catalytic quantity of a catalyst, and optionally (E) a trimethylsiloxy endblocked polydimethylsiloxane fluid, (G) a hydroxyl endblocked polydiorganosiloxane fluid, and (F) a quantity of a thermal aging enhancer, colorant, flame retardant enhancer, adhesion promoter and fillers, other than calcium carbonate or reinforcing silica.

The polydimethylsiloxane (A) of our silicone sealant composition has a viscosity measured at 25°C. of from 1 Pa·s to 300 Pa·s and the endblocking is selected from silicon-bonded hydroxyl groups or a mixture of silicon-bonded hydroxyl groups and trimethylsiloxy groups. These polydimethylsiloxanes preferably have a viscosity at 25°C. of from 5 to 100 Pa·s. The viscosities herein are values as determined by a rotational viscoseter, such as a Brookfield™ Synchrolectric Viscoseter (cup and spindle), Brookfield Engineering Laboratories, Stoughton, Massachusetts, using the method ASTM D 1084 Method B. Although these polymers of (A) are described as polydimethylsiloxanes, one should understand that small amounts of other diorganosiloxane units, monoorganosilsesquioxane units and $SiO_2$ units may also be present. Preferably, less than 5 mole percent based on the total number of units in the polymer are non-polydimethylsiloxane. Other organic groups bonded to silicon can include phenyl, ethyl and vinyl, and preferably the organic groups are methyl which are present in amounts of greater than 95 percent of the total number of organic groups in the polymer. The polydimethylsiloxanes can be endblocked with hydroxyl groups or they can be partially endblocked with hydroxyl groups and partially endblocked with trimethylsiloxy groups. Those polydimethylsiloxanes particularly useful for the present invention are those which have 80% or more hydroxyl endgroups and 20% or less trimethylsiloxy endgroups. For example, such polydimethylsiloxanes are known in the art from US-A 3,274,145, issued September 20, 1966, which shows these polymers and their preparation. (A) can be a mixture of two or more polydimethylsiloxanes, as long as, the average viscosity of the mixture falls within the stated range of viscosities. The viscosity of (A) can result from a mixture of two or more hydroxyl endblocked polydimethylsiloxanes wherein some of the polymers have a viscosity of less than 1 Pa·s, such as 0.5 Pa·s, or greater than 300 Pa·s such as gum viscosities greater than 1,000 Pa·s, as long as the average viscosity at 25°C. is in the range of 1 to 300 Pa·s. The mixtures of the polydimethylsiloxanes in (A) provide specific advantageous rheology properties to the uncured composition, and impart the cured products with desirable physical properties. Such properties are flow characteristics of the uncured composition, where low viscosities provide plasticizing properties and high viscosities provide thixotropic properties. The modulus of the cured sealants are regulated by selecting the amount of the endblocking of the polydimethylsiloxane in (A) which is trimethylsiloxy. Increasing the amount of ends of the polydimethylsiloxane which are trimethylsiloxy groups reduces the modulus, if the other ingredients in the composition are the same.

Filler (B) is present in an amount of from 25 to 200 parts by weight per 100 parts by weight of (A) and consists of 25 to 200 parts by weight of calcium carbonate and 0 to 25 parts by weight of reinforcing silica. Filler (B) can be only calcium carbonate, or a combination of calcium carbonate and reinforcing silica. Filler (B) is preferably calcium carbonate, or a mixture of calcium carbonates, to provide the best results with respect to the hot hydrocarbon oil resistant properties. The calcium carbonate is either a precipitated calcium carbonate or a ground calcium carbonate. These calcium carbonates can be surface treated or can be untreated. Stearate treated ground calcium carbonates are available commercially, such as Gama-Sperse(R) CS-11, Georgia Marble Company, Kennesaw, Georgia; and OMYACARB (R) FT (surface area of 6 $m^2/g$ BET method), OMYA Inc, Proctor Vermont. Other examples of ground calcium carbonate include Carbital™ 90S, having a surface area of 12 $m^2/g$, a stearate content of 1.0 weight percent and availability from English China Clay International, St. Austell, U.K.; and Polycarb™ S and Polycarb™ SB, both having a surface area of 8 $m^2/g$, a stearate content of 0.9 weight percent, and sold by English China Clay International. Stearate treated precipitate calcium carbonate such as Winnofil(R) SPM (surface area of 21 $m^2/g$) is manufactured by ICI Chemicals and Polymers, Great Britain. Other examples of precipitated calcium carbonates include Calofort™ S, having a surface area of 24 $m^2/g$, a stearate content of 3.0 weight percent, and sold by J. E. Sturge, Ltd, Birmingham, U.K.; and Socal™ $U_1S_2$, having a surface area of 20 $m^2/g$, a stearate content of 2.4 to 3.0 weight percent, and sold by Solvay and Company, Brussels, Belgium. These precipitated calcium carbonates preferably have an average particle size of less than 0.1 micrometer. An untreated ground calcium carbonate is available from OMYA Inc, and is OMYA® Carb UF. A precipitated calcium carbonate is available from Solvay, Brussels, Belgium as Socal™ 312N.

Many reinforcing silica fillers are available commercially. These include those available from Cabot Corporation, Tuscola, Illinois, and are known as Cab-O-Sil™ LM-150 (surface area = 150 $m^2/g$), Cab-O-Sil™ L-90 (surface area = 90 $m^2/g$); Cabot™ TS-530 (a hexamethyldisilazane treated silica); and Cabot™ TS-720 (a silicone treated silica). Other reinforcing silicas are fumed silica fillers from Degussa Corporation, Ridgefield Park, New Jersey, known as Aerosils™

ranging from a surface area of 90 $m^2/g$ to 380 $m^2/g$. Other reinforcing silicas are available from Wacker Silicones Corporation, Adrian, Michigan, such as Wacker HDK(R) H20 (organosilane treated with surface area = 170 $m^2/g$). The forgoing reinforcing silicas are examples of those which can be used in filler (B). In addition to filler (B) being calcium carbonate, or a combination of calcium carbonate and reinforcing silica, there may be advantages to having other kinds of fillers present in our one package RTV silicone sealant composition which is used for making gaskets. These other fillers might be diatomaceous earth, titanium dioxide, alumina, crushed quartz, iron oxide and carbon black.

Crosslinker (C) is present in an amount of from 5 to 25 parts by weight per 100 parts by weight of (A). Component (C) is selected from a group of combinations of defined ketoximosilanes or ketoximosilane mixtures. The following crosslinker combinations provide cured gaskets which have a reduced volume swell when exposed to hot hydrocarbon oil, compared to gaskets made from equivalent compositions using vinyltriketoximosilane as the sole crosslinker. These crosslinker combinations also provide compositions which cure rapidly enough that the tack-free-time is less than 100 minutes, preferably less than 50 minutes. Therefore, the compositions made with the combinations of crosslinkers identified herein will cure rapidly enough and in a manner sufficient to allow them to make gaskets on an automated production line, such as one would find in the assembling of internal combustion engines and automobiles. Also, our gaskets have an improved resistance to hot hydrocarbon oils as evidenced by the reduced volume swell after immersion in the hot oil.

The combinations from which crosslinker (C) is selected are defined as follows:

Combination (a) is 10 to 75 weight percent vinyltriketoximosilane and 25 to 90 weight percent methyltriketoximosilane, where the total vinyltriketoximosilane and methyltriketoximosilane is equal to 100 weight percent. Preferably, combination (a) is 40 to 60 weight percent vinyltriketoximosilane and 60 to 40 weight percent methyltriketoximosilane, where the total weight of vinyltriketoximosilane and methyltriketoximosilane is 100 weight percent. The term "ketoximo" as used herein includes the various known ketoximo groups which are used to make these kinds of silanes, for example, methylethylketoximo and dimethylketoximo, where methylethylketoximo is preferred.

Combination (b) is 25 to 90 weight percent of vinyltriketoximosilane and 10 to 75 weight percent of tetraketoximosilane, where the total weight of the vinyltriketoximosilane and the tetraketoximosilane is 100 weight percent. The preferred combination (b) is 25 to 40 weight percent of vinyltriketoximosilane and 60 to 75 weight percent of tetraketoximosilane where the total weight of the vinylketoximosilane and the tetraketoximosilane is 100 weight percent.

Combination (c) is 25 to 90 weight percent of vinyltriketoximosilane and 10 to 75 weight percent of a tetrafunctional ethoxyketoximosilane mixture consisting of 20 to 70 weight percent of monomethoxytriketoximosilane, 20 to 60 weight percent diethoxydiketoximosilane, 1 to 20 weight percent triethoxymonoketoximosilane, and 0 to 59 weight percent of tetraketoximosilane, where the combined weight of the vinyltriketoximosilane and the tetrafunctional ethoxyketoximosilane mixture is 100 weight percent. The preferred combination of (c) is 30 to 50 weight percent vinyltriketoximosilane and 50 to 70 weight percent of the tetrafunctional ethoxyketoximosilane mixture, where the combined weight of the vinyltriketoximosilane and the tetrafunctional ethoxyketoximosilane mixture is 100 weight percent. The tetrafunctional ethoxyketoximosilane mixtures are known and are prepared by the process described in US-A 4,657,967 which generally teaches these tetrafunctional ethoxyketoximosilane mixtures and their preparation.

Combination (d) is 25 to 90 weight percent of methyltriketoximosilane and 10 to 75 weight percent of the tetrafunctional ethoxyketoximosilane mixture as described for combination (c), where the combined weight of the methyltriketoximosilane and the tetrafunctional ethoxyketoximosilane mixture is 100 weight percent.

Combination (e) is vinyltriketoximosilane, methyltriketoximosilane and the tetrafunctional ethoxyketoximosilane mixture as described for combination (c) above. The vinyltriketoximosilane is present in an amount of at least 1 weight percent. The methyltriketoximosilane is present in an amount of from 25 to 90 weight percent. The tetrafunctional ethoxyketoximosilane mixture is present in an amount of at least 1 weight percent. The combined weight of the vinyltriketoximosilane, the methyltriketoximosilane and the tetrafunctional ethoxyketoximo-silane mixture is 100 weight percent.

Combination (f) is 10 to 75 weight percent of vinyltriketoximosilane and 25 to 90 weight percent of a methyltri (methoxyketoximo)silane mixture consisting of 50 to 90 weight percent of methyltriketoximosilane and 10 to 50 weight percent of methylmonomethoxydiketoximosilane, where the combined weight of the vinyltriketoximosilane and methyltri (methoxyketoximo)silane mixture is 100 weight percent. The methyltri(methoxyketoximo)silane mixture is made by using an exchange reaction where a ketoxime, such as methylethyl ketoxime, is heated with methyltrimethoxysilane eliminating methanol. Some small amounts of methyldimethoxymonoketoximosilane may be present in the methyltri (methoxyketoximo)silane mixture, usually less than 5 weight percent, preferably less than one weight percent. A preferred combination of component (f) has 25 to 50 weight percent of vinyltriketoximosilane and 50 to 75 weight percent of the above methyltri(methoxyketoximo)silane mixture, where the combined weight of the vinyltriketoximosilane and the methyltri(methoxyketoximo)silane mixture is 100 weight percent. For those silicone sealant compositions selected to make gaskets and which contain only calcium carbonate as filler (B), a more preferred combination (f) is 35 to 65 weight percent of vinyltriketoximosilane and 35 to 65 weight percent of the above methyltri(methoxyketoximo)silane mixture, where the combined weight percent of the vinyltriketoximosilane and the methyltri(methoxyketoximo)silane

mixture is 100 weight percent.

Combination (g) is 10 to 75 weight percent of tetraketoximosilane and 25 to 90 weight percent of the methyltri-(methoxyketoximo)silane mixture as described for combination (f), where the combined weight of the tetraketoximosilane and the methyltri(methoxyketoximo)silane mixture is 100 weight percent.

Combination (h) is 10 to 75 weight percent of the tetrafunctional ethoxyketoximosilane mixture as described for combination (c) and 25 to 90 weight percent of the methyltri(methoxyketoximo)silane mixture as described for combination (f), where the combined weight of the tetrafunctional ethoxyketoximosilane and the methyltri-(methoxyketoximo) silane mixture is 100 weight percent. A preferred combination (h) is 30 to 50 weight percent of the methyltri(methoxyketoximo)silane mixture and 50 to 70 weight percent of the tetrafunctional ethoxyketoximosilane mixture, where the combined weight of the methyltri(methoxyketoximo)silane mixture and the tetrafunctional ethoxyketoximosilane mixture is 100 weight percent.

Combination (i) is 25 to 90 weight percent methyltriketoximosilane and 10 to 75 weight percent of a vinyltri(methoxyketoximo)silane mixture consisting of 50 to 90 weight percent vinyltriketoximosilane and 10 to 50 weight percent vinylmonomethoxydiketoximosilane, where the methyltriketoximosilane and the vinyltri(methoxyketoximo)-silane mixture is 100 weight percent. The vinyltri-(methoxyketoximo)silane mixture is made by an exchange reaction where a ketoxime, such as methylethyl ketoxime, is heated with vinyltrimethoxysilane.

Combination (j) is 10 to 75 weight percent of tetraketoximosilane and 25 to 90 weight percent of the vinyltri(methoxyketoximo)silane mixture as described for combination (i) where the combined weight of the tetraketoximosilane and the vinyltri(methoxyketoximo)silane mixture is 100 weight percent.

Combination (k) is 25 to 90 weight percent of the vinyltri(methoxyketoximo)silane mixture as described for combination (i) and 10 to 75 weight percent of the tetrafunctional ethoxyketoximosilane mixture as described for combination (c), where the combined weight of the vinyltri(methoxyketoximo)silane mixture and the tetrafunctional ethoxyketoximosilane mixture is 100 weight percent.

Combination (l) is 10 to 75 weight percent of the vinyltri(methoxyketoximo)silane mixture as described for combination (i) and 25 to 90 weight percent of the methyltri(methoxyketoximo)silane mixture as described for combination (f), where the combined weight of the vinyltri-(methoxyketoximo)silane mixture and the methyltri(methoxyketoximo) silane mixture is 100 weight percent.

Our preferred silicone sealant compositions are those which use as the crosslinker (C): combination (a), combination (b), combination (c), combination (f) or combination (h). These combinations provide silicone sealant compositions which have excellent tack-free-times and excellent reduction of volume swell in hot hydrocarbon oils. As shown by the examples, a crosslinker of vinyltriketoximosilanes, tetraketoximosilanes and tetrafunctional ethoxyketoximosilane mixtures will produce silicone sealant compositions which have a short tack-free-time compared to other kinds of ketoximosilane crosslinkers.

Therefore, our silicone sealant compositions, which use our combinations as described above for crosslinker (C), are those which will have a tack-free-time of less than 100 minutes, preferably less than 50 minutes. If the silicone sealant compositions used in our method have tack-free-times greater than 100 minutes, the silicone sealant composition cures too slowly in the process for making gaskets to be economically useful for FIPG techniques on automobile assembly production lines. The current standard for silicone sealant gaskets in the automobile industry for swell are those made from compositions using as the crosslinker, vinyltriketoximosilane. Therefore, gaskets made by the method of the present invention, using a silicone sealant composition having as the crosslinker one of the combinations described herein, have less swell (as measured by volume percent gain after immersion in hot hydrocarbon oil) than those gaskets made from the accepted industry standard. A reduction in volume swell of more than one percentage point is considered a significant reduction. Although the use of our particular crosslinker combinations provide the unique property profile of tack-free-time and swell in hot hydrocarbon oils, the presence of other ingredients in the silicone sealant composition may enhance these properties, have a deleterious effect on them, or might not either positively or negatively change these properties. Therefore, care should be used when combining the ingredients as further described herein.

The silicone sealant compositions of the present method for making gaskets contain a catalyst for reducing the curing time for a mixture of (A), (B) and (C) when exposed to an atmosphere containing moisture such as air. These catalysts are those which are known in the art to cure such compositions and include organotin compounds and organotitanium compounds. These curing catalysts are useful to provide faster curing as evidenced by a shorter tack-free-time and more rapidly obtaining dry to touch surfaces when exposed to the atmosphere. Thus, the curing catalysts can be metal carboxylates such as tin carboxylates which are preferred and include dialkyltin diacylates such as dibutyltin dilaurate, dibutyltin diacetate, dibutyltin di-2-ethylhexoate and dimethyltin bis-neodecanoate. Other metal carboxylates can be included if they provide the fast curing which is required in making gaskets such as the FIPG type. Organotitanium catalysts which are used include the tetraalkyl titanates such as tetrabutyl titanate or tetraisopropyl titanate; the chelated titanates such as those taught in US-As 3,334,067 and 3,689,454. For most silicone sealant compositions useful for the production of gaskets, the amount of curing catalyst is usually from 0.01 to 2 parts by weight

per 100 parts by weight of (A). The preferred curing catalysts are the tin catalysts.

The silicone sealant compositions selected for making gaskets of this invention can optionally contain additional ingredients. One such additional ingredient is (E) 0 to 25 parts by weight per 100 parts by weight (A) of a trimethylsiloxy endblocked polydimethylsiloxane fluid having a viscosity measured at 25°C. is from 0.01 to 100 Pa·s, preferably from 0.1 to 1 Pa·s with the preferred amount being from 5 to 25 parts by weight of (E) per 100 parts by weight of (A). These polydimethylsiloxane fluids are useful for modifying the modulus of the cured gasket and can also be used to alter the rheology of the silicone sealant composition. An additional benefit received from the use of these polydimethylsiloxane fluids is that they synergistically reduce the volume swell when used with our crosslinker combinations of (C). Many of these trimethylsiloxy endblocked polydimethylsiloxane fluids are available commercially at a variety of viscosities.

The silicone sealant compositions used in our method of making gaskets can contain other additives (F) which include thermal aging enhancers, such as carbon black, iron oxide, cerium oxide, and titanium dioxide; colorants, such as inorganic oxide pigments, organic pigments and aluminum powder; flame retardants, such as platinum compounds or manganese carbonate; fillers other than calcium carbonate and reinforcing silica, such as zinc carbonate, magnesium oxide, aluminum hydroxide, zinc oxide and powdered mica; and adhesion promoters, like epoxy functional silanes, such as gamma-glycidoxypropyltrimethoxysilane, gamma-glycidoxypropylmethyldimethoxysilane and gamma-methacryloxytrimethoxysilane. Our silicone sealant compositions can contain one or more of these other additives. Acceptable additives do not cause the gaskets to increase the hot hydrocarbon oil swell, i.e. reduce the hot hydrocarbon oil resistance. The amount of each additive is that amount which is ordinarily used in the silicone sealant art. Of these additives, the epoxy functional silanes are particularly useful and especially gamma-glycidoxypropyltrimethoxysilane in quantities of from 0.1 to 2 parts by weight per 100 parts by weight of (A).

Silicone sealant compositions selected to make gaskets and which contain reinforcing silica as a portion of the filler can optionally contain from 0 to 25 parts by weight per 100 parts by weight (A) of a hydroxyl endblocked polydiorganosiloxane having a viscosity measured at 25°C. of less than 0.1 Pa·s. These polydiorganosiloxanes have as the silicon-bonded organic radicals of methyl, phenyl or a mixture of both methyl and phenyl. These hydroxyl endblocked polydiorganosiloxanes are useful in preventing the onset of crepe hardening which can occur when reinforcing silica is used. The preferred amount is from 10 to 25 parts by weight of the polydiorganosiloxane per 100 parts by weight of (A).

The silicone sealant composition of this invention can be made by mixing the above ingredients according to the processes used in the silicone sealant art. Specific preparations of the silicone sealant compositions is illustrated in the following examples.

These following examples are presented for illustrative purposes of the invention which is more properly delineated in the claims. In the examples, viscosities are measured at 25°C., "part" or "parts" are respectively "part by weight" or "parts by weight."

Example 1

Silicone sealant compositions were prepared by mixing the following ingredients in the absence of moisture with the resulting compositions stored in containers to protect them from the ingress of moisture until the compositions were used to make cured products. The ingredients were: 100 parts of polydimethylsiloxane having a viscosity of 16.5 Pa·s with 85% of the terminal groups being silicon-bonded hydroxyl and 15% of the terminal groups being trimethylsiloxy; 20 parts of a trimethylsiloxy terminated polydimethylsiloxane fluid having a viscosity of 1 Pa·s; 74.7 parts of a high purity, fine, wet ground, stearate treated natural calcium carbonate with a surface area of 6 $m^2/g$ {OMYACARB(R) FT; 10.9 parts of reinforcing fumed silica having a surface area of 90 $m^2/g$ {Cab-O-Sil(R) L-90, 1.0 part of gamma-glycidoxypropyltrimethoxysilane; 0.2 part of dimethyltin bis-neodecanoate; and the parts and kind of ketoximosilane crosslinker shown in Table 1 for each composition prepared. Each composition was tested as to its suitability for use to make gaskets by measuring, after exposing test samples to an atmosphere of 50% relative humidity at room temperature (20°C.), tensile strength at break, elongation at break, and the modulus at 100% elongation by ASTM Standard D-412; and durometer on the Shore A scale by ASTM Standard D-2240.

The tack-free-time (TFT) was also evaluated for each composition by determining the time from exposure of the composition to the atmosphere until a dry surface, free from tack was obtained by lightly applying a strip of polyethylene film to the surface of the curing silicone sealant composition such that the polyethylene film was wet on the surface with minimum pressure. The polyethylene film was then pulled away at 180 degrees. This procedure was repeated with a fresh polyethylene film strip until no sealant was visible on the polyethylene film strip when pulled away. The minimum time which results in no sealant pick up was the tack-free-time (TFT). The polyethylene film strips were applied frequently, such as every 5 minutes, as the silicone sealant composition cured and as the TFT was approached the frequency of the application of the strips was increased, such as every one or two minutes.

The volume swell in hot hydrocarbon oil was also determined on samples of each composition by immersing cured tabs of silicone sealant in 5W30 motor oil (a hydrocarbon oil) at 150°C. for a period of 7 days, after which the durometer, tensile strength at break, elongation at break, and 100% modulus were measured after removing the sample from the

oil bath. Each tab was 1.9 cm by 3.8 cm by 0.18 cm thick. The initial volume of each tab was determined by immersing the tab in room temperature water (22.2°C.) and measuring the amount of water displaced. The tabs were then dried by blotting with a paper towel and immersed in the hydrocarbon oil which was at 150°C. for 7 days. The tabs and oil were cooled to 22.2°C., removed from the oil, blotted with a wipe, rinsed with chlorothene, after a few minutes the chlorothene on the tab dissipated, and the final volume was determined by immersing the tab in water and measuring the amount of water displaced. The volume swell was determined by the following equation:

$$\frac{(\text{Final Volume}) - (\text{Initial Volume})}{(\text{Initial Volume})} \times 100 = \%\ \text{Swell}$$

The results of the test are in Table 1.

**TABLE 1**

| | CROSSLINKER | | | INITIAL PROPERTIES | | | | PROPERTIES AFTER OIL IMMERSION | | | | |
|---|---|---|---|---|---|---|---|---|---|---|---|---|
| SAMPLE | PARTS VTO* | PARTS MTO** | TFT min. | TENSILE STRENGTH kPa | ELONG-ATION % | DUROM-ETER SHORE A | 100% MODULUS kPa | TENSILE STRENGTH kPa | ELONG-ATION % | DUROM-ETER SHORE A | 100% MODULUS kPa | SWELL % |
| A*** | 10.9 | 0 | 35 | 2048 | 415 | 34 | 752 | 1379 | 473 | 15 | 496 | 34 |
| B | 6.5 | 4.4 | 40 | 1882 | 317 | 35 | 821 | 1158 | 369 | 17 | 510 | 32 |
| C | 4.4 | 6.5 | 55 | 2144 | 375 | 35 | 841 | 1338 | 422 | 17 | 531 | 30 |
| D*** | 0 | 10.9 | 150 | 1862 | 311 | 36 | 848 | 1255 | 437 | 17 | 510 | 26 |

* VTO = vinyltri(methylethylketoximo)silane
** MTO = methyltri(methylethylketoximo)silane
*** Comparative example

In Table 1, comparative Sample A had a low TFT of 35 minutes which is acceptable for making gaskets and a volume swell of 34% after 7 days in 150°C. motor oil. Comparative Sample D had a low volume swell of 26% after 7 days in 150°C. motor oil, but the TFT was 150 minutes which is considered too long for making gaskets on automated production lines. Samples B and C had acceptable TFT of 40 minutes and 55 minutes, respectively, and had reduced volume swells of 32% and 30% respectively, when compared to Sample A's volume swell of 34%. Sample A used as

the sole crosslinker vinyltri(methylethylketoximo)silane, which is an industry standard and was utilized for comparison.

Example 2

A silicone sealant composition was prepared as described in Example 1 except that the calcium carbonate filler [OMYACARB(R) FT] was replaced by 80.1 parts of a stearate surface treated ground calcium carbonate, [Gamasperse (R) CS-11], and the reinforcing fumed silica, Cab-O-Sil(R) L-90, was replaced with a reinforcing fumed silica Cab-O-Sil(R) MS-7D which has a surface area of 200 $m^2/g$. The parts and kinds of ketoximosilane crosslinker used are shown in Table 2 which also shows the results of the test evaluations which were performed as described in Example 1.

TABLE 2

| | CROSSLINKER | | | INITIAL PROPERTIES | | | | PROPERTIES AFTER OIL IMMERSION | | | | |
|---|---|---|---|---|---|---|---|---|---|---|---|---|
| SAMPLE | PARTS VTO* | PARTS MTO** | TFT min. | TENSILE STRENGTH kPa | ELONG-ATION % | DUROM-ETER SHORE A | 100% MODULUS kPa | TENSILE STRENGTH kPa | ELONG-ATION % | DUROM-ETER SHORE A | 100% MODULUS kPa | SWELL % |
| E*** | 11.0 | 0 | 50 | 1489 | 540 | 28 | 565 | 1096 | 482 | 13 | 427 | 33 |
| F | 4.4 | 6.6 | 95 | 1606 | 492 | 30 | 641 | 1138 | 486 | 14 | 441 | 29 |

* VTO = vinyltri(methylethylketoximo)silane
** MTO = methyltri(methylethylketoximo)silane
*** Comparative example

This example illustrates that using a different calcium carbonate and reinforcing silica filler than used in Example 1 in making a silicone sealant composition, a lower swell in hot motor oil was obtained when a mixture of VTO and MTO was used compared to a silicone sealant composition made using VTO as the sole crosslinker.

Example 3

Silicone sealant compositions were prepared as described in Example 1 except that the 74.7 parts of calcium carbonate filler was replaced by 87 parts, and the 10.9 parts of the reinforcing fumed silica, Cab-O-Sil(R) L-90, was replaced with 8.7 parts of a reinforcing fumed silica, Aerosil™ R972, which has a surface area of 110 $m^2/g$. The parts and kinds of ketoximosilane crosslinker used are shown in Table 3 which also shows the results of the test evaluations which were performed as described in Example 1.

TABLE 3

| | CROSSLINKER | | | INITIAL PROPERTIES | | | | PROPERTIES AFTER OIL IMMERSION | | | | |
|---|---|---|---|---|---|---|---|---|---|---|---|---|
| | PARTS VTO* | PARTS MTO** | TFT min. | TENSILE STRENGTH kPa | ELONGATION % | DUROMETER SHORE A | 100% MODULUS kPa | TENSILE STRENGTH kPa | ELONGATION % | DUROMETER SHORE A | 100% MODULUS kPa | SWELL % |
| G*** | 11.4 | 0 | 45 | 1710 | 310 | 32 | 807 | 1076 | 358 | 14 | 469 | 31 |
| H | 4.6 | 6.8 | 40 | 1903 | 349 | 33 | 855 | 1255 | 365 | 15 | 524 | 28 |

* VTO = vinyltri(methylethylketoximo)silane
** MTO = methyltri(methylethylketoximo)silane
*** Comparative example

Table 3 illustrates further that changing the calcium carbonate filler and the reinforcing silica filler provided lower swell in hot hydrocarbon oil using a mixture of MTO and VTO compared to VTO as the sole crosslinker.

Example 4

A silicone sealant composition was prepared as described in Example 1, Sample C, except that the MTO was replaced by a methyltri(methoxyketoximo)silane mixture (MTMO) having 72 weight percent methyltri(ethylmethylketoximo)silane, 21 weight percent methyldi(ethylmethylketoximo)methoxysilane, 0.5 weight percent methyldimethoxy-(ethylmethylketoximo)silane and 6.5 weight percent process silane and siloxane impurities. The parts and kinds of crosslinker were as shown in Table 4 which also contains the results of the test evaluations which were performed as described in Example 1. For comparison, Samples A and D from Example 1 are included in Table 4.

**TABLE 4**

| | CROSSLINKER | | | | INITIAL PROPERTIES | | | | PROPERTIES AFTER OIL IMMERSION | | | | |
|---|---|---|---|---|---|---|---|---|---|---|---|---|---|
| SAMPLE | PARTS VTO* | PARTS MTO | PARTS MTMO | TFT min. | TENSILE STRENGTH kPa | ELONG-ATION % | DUROM-ETER SHORE A | 100% MODULUS kPa | TENSILE STRENGTH kPa | ELONG-ATION % | DUROM-ETER SHORE A | 100% MODULUS kPa | SWELL % |
| A*** | 10.9 | 0 | 0 | 35 | 2048 | 415 | 34 | 752 | 1379 | 473 | 15 | 496 | 34 |
| I | 4.4 | 0 | 6.5 | 50 | 2027 | 319 | 36 | 869 | 1310 | 385 | 17 | 552 | 29 |
| D*** | 0 | 10.9 | 0 | 150 | 1862 | 311 | 36 | 848 | 1255 | 437 | 17 | 510 | 26 |

* VTO = vinyltri(methylethylketoximo)silane
*** Comparative example

Table 4 illustrates the reduction of the swell in hot hydrocarbon oil while maintaining a useful TFT by using a

combination of VTO and a methyltri(methoxyketoximo)silane mixture instead of the combination of VTO and MTO which are illustrated in Examples 1-3.

Example 5

Silicone sealant compositions were prepared by mixing the following ingredients in the absence of moisture with the resulting compositions being stored in containers to protect them from the ingress of moisture until the compositions were used to make cured products. The ingredients were:

Sample J - 100 parts of polydimethylsiloxane having a viscosity of 16.5 Pa·s with 85% of the terminal groups being silicon-bonded hydroxyl and 15% of the terminal groups being trimethylsiloxy; 95.8 parts of a high purity, fine, wet ground, stearate treated natural calcium carbonate with a surface area of 6 $m^2/g$ {OMYACARB(R)}; 9.8 parts of reinforcing fumed silica having a surface area of 150 $m^2/g$ {Cab-O-Sil(R) LM-150; 1.2 part of gamma-glycidoxypropyltrimethoxysilane; 0.2 part of dimethyltin bis-neodecanoate; and the parts and kind of ketoximosilane crosslinker as shown in Table 5 were prepared;
Sample K - 100 parts of polydimethylsiloxane having a viscosity of 16.5 Pa·s with 85% of the terminal groups being silicon-bonded hydroxyl and 15% of the terminal groups being trimethylsiloxy; 20 parts of a trimethylsiloxy terminated polydimethylsiloxane fluid having a viscosity of 1 Pa·s; 74.7 parts of a high purity, fine, wet ground, stearate treated natural calcium carbonate with a surface area of 6 $m^2/g$ {OMYACARB(R) FT); 10.9 parts of reinforcing fumed silica having a surface area of 90 $m^2/g$ {Cab-O-Sil(R) L-90}; 1.0 part of gamma-glycidoxypropyltrimethoxysilane; 0.2 part of dimethyltin bis-neodecanoate; and the parts and kind of ketoximosilane crosslinker as shown in Table 5 were prepared; and
Sample L - 100 parts of polydimethylsiloxane having a viscosity of 16.5 Pa·s with 85% of the terminal groups being silicon-bonded hydroxyl and 15% of the terminal groups being trimethylsiloxy; 20 parts of a trimethylsiloxy terminated polydimethylsiloxane fluid having a viscosity of 1 Pa·s; 74.7 parts of a high purity, fine, wet ground, stearate treated natural calcium carbonate with a surface area of 6 $m^2/g$ {OMYACARB(R) FT}; 10.9 parts of reinforcing fumed silica having a surface area of 90 $m^2/g$ {Cab-O-Sil(R) L-90}; 1.0 part of gamma-glycidoxypropyltrimethoxysilane; 0.2 part of dimethyltin bis-neodecanoate; and the parts and kind of ketoximosilane crosslinker as shown in Table 5 were prepared.

In Table 5, MTMO represents the methyltri(methoxyketoximo)silane as described in Example 4, and TEOS represents a tetrafunctional (ethoxyketoximo)silane mixture having 47 weight percent ethoxytri(ethylmethylketoximo)-silane, 36 weight percent diethoxydi(ethylmethylketoximo)-silane, 7 weight percent tri(ethoxy)ethylmethylketoximosilane, 8 weight percent tetra(ethylmethylketoximo)silane and 2 weight percent silane and siloxane process impurities. Each composition was tested as described in Example 1 and the results of the test are shown in Table 5. Sample A of Example 1 is reproduced in Table 5 for comparison.

TABLE 5

| SAMPLE | CROSSLINKER | | | | INITIAL PROPERTIES | | | | PROPERTIES AFTER OIL IMMERSION | | | | |
|---|---|---|---|---|---|---|---|---|---|---|---|---|---|
| | PARTS VTO* | PARTS MTMO | PARTS TEOS | TFT min. | TENSILE STRENGTH kPa | ELONGATION % | DUROMETER SHORE A | 100% MODULUS kPa | TENSILE STRENGTH kPa | ELONGATION % | DUROMETER SHORE A | 100% MODULUS kPa | SWELL % |
| A*** | 10.9 | 0 | 0 | 35 | 2048 | 415 | 34 | 752 | 1379 | 473 | 15 | 496 | 34 |
| J++ | 0 | 4.9 | 7.4 | 36 | 1806 | 182 | --- | --- | 1276 | 235 | --- | --- | 23 |
| K | 4.4 | 0 | 6.5 | 45 | 1882 | 242 | 37 | 1020 | 1069 | 199 | 22 | 669 | 21 |
| L | 4.4 | 0 | 6.5+ | 6 | 1655 | 281 | 35 | 889 | 1076 | 295 | 20 | 579 | 23 |

* VTO = vinyltri(methylethylketoximo)silane
\+ TOS = tetra(ethylmethylketoximo)silane in 6.5 parts toluene
++ Hot hydrocarbon oil immersion results were obtained after 14 days.
*** Comparative example

Table 5 illustrates various combinations of crosslinkers which provide reduced swell in hot hydrocarbon oil compared to compositions containing only VTO as crosslinker.

Example 6

Silicone sealant compositions, Samples M, N, O, P and Q, were prepared by first making a base composition by mixing the following ingredients: 100 parts of the polydimethylsiloxane having both hydroxyl terminal groups and trimethylsiloxy terminal groups as described in Example 1, 24 parts of trimethylsiloxy endblocked polydimethylsiloxane having a viscosity of 1 Pa·s, 76.4 parts of the calcium carbonate as described in Example 1, 11.1 parts of reinforcing silica as described in Example 5, and 2.6 parts of hydroxyl endblocked polymethylphenylsiloxane having a hydroxyl content of 4.5 weight percent. To this base mixture, under conditions which prevented the ingress of moisture, were added the following ingredients: parts and kind of crosslinker as shown in Table 6, 1.1 part of gamma-glycidoxypropyltrimethoxysilane and 0.2 part of dibutyltin dilaurate.

Each of the compositions were tested as described in Example 1 and the results obtained are shown in Table 6.

TABLE 6

| SAMPLE | CROSSLINKER | | | | INITIAL PROPERTIES | | | | PROPERTIES AFTER OIL IMMERSION | | | | |
|---|---|---|---|---|---|---|---|---|---|---|---|---|---|
| | PARTS VTO* | PARTS MTO | PARTS MTMO | TFT min. | TENSILE STRENGTH kPa | ELONG-ATION % | DUROM-ETER SHORE A | 100% MODULUS kPa | TENSILE STRENGTH kPa | ELONG-ATION % | DUROM-ETER SHORE A | 100% MODULUS kPa | SWELL % |
| M*** | 10.7 | 0 | 0 | 60 | 1889 | 519 | 27 | 538 | 1165 | 598 | 8 | 296 | 39 |
| N | 6.4 | 4.3 | 0 | 80 | 1848 | 459 | 28 | 586 | 1172 | 465 | 10 | 365 | 35 |
| O*** | 4.3 | 6.4 | 0 | 120 | 1765 | 442 | 27 | 565 | 1103 | 510 | 9 | 338 | 35 |
| P*** | 2.1 | 8.6 | 0 | 180 | 1958 | 506 | 27 | 572 | 1179 | 522 | 10 | 345 | 33 |
| Q*** | 0 | 10.7 | 0 | 220 | 1820 | 484 | 28 | 558 | 1055 | 582 | 8 | 303 | 33 |

* VTO = vinyltri(methylethylketoximo)silane
*** Comparative example

Samples N, O and P illustrate that the volume swell is reduced by using a mixture of VTO and MTO, however, the addition of the hydroxyl endblocked polymethylphenylsiloxane fluid increased the TFT significantly when the concentration of the VTO was less than 5 parts. Therefore, Samples O and P were considered to be outside the useful range for FIPG applications. Comparative Sample M had a high swell in hot hydrocarbon oil whereas Comparative Sample Q had a lower swell but the TFT was very high.

Example 7

Silicone sealant compositions, Samples R and S, were prepared by mixing, under conditions which prevented the ingress of moisture, the following ingredients: 100 parts of the polydimethylsiloxane having both hydroxyl terminal groups and trimethylsiloxy terminal groups as described in Example 1, 23.2 parts of a trimethylsiloxy endblocked polydimethylsiloxane fluid having a viscosity of 0.1 Pa·s, 74.3 parts of the calcium carbonate as described in Example 1, 8.7 parts of reinforcing silica as described for Sample J in Example 5, 1.1 parts of gamma-glycidoxypropyltrimethoxysilane, 0.2 part of dimethyltin bis-neodecanoate, and the parts and kind of crosslinker as shown in Table 7.

Each of the compositions were tested as described in Example 1 and the results obtained are shown in Table 7.

**TABLE 7**

| SAMPLE | CROSSLINKER | | | | INITIAL PROPERTIES | | PROPERTIES AFTER OIL IMMERSION | | |
|---|---|---|---|---|---|---|---|---|---|
| | PARTS VTO* | PARTS MTMO | PARTS TEOS | TFT min. | TENSILE STRENGTH kPa | ELONG-ATION % | TENSILE STRENGTH kPa | ELONGATION % | SWELL % |
| R*** | 10.9 | 0 | 0 | 47 | 1862 | 456 | 1027 | 551 | 41 |
| S | 0 | 4.4 | 6.6 | 37 | 1882 | 244 | 931 | 295 | 28 |

* VTO = vinyltri(methylethylketoximo)silane
*** Comparative example

Sample S illustrates that by changing the trimethylsiloxy terminated polydimethylsiloxane fluid (comparing to Example 1) to a lower viscosity fluid, both a reduction of TFT and percentage swell in hot hydrocarbon oil are obtainable.

Example 8

Silicone sealant compositions were prepared by mixing the following ingredients in the absence of moisture with the resulting compositions being stored in containers to protect them from the ingress of moisture until the compositions were used to make cured products. The mixed ingredients were: 100 parts of the polydimethylsiloxane described in Example 1; 12 parts of trimethylsiloxy terminated polydimethylsiloxane fluid described in Example 1; 82.2 parts of a precipitated calcium carbonate which has a stearate treated surface, where the stearate content was 2.8 weight percent, and the surface area was 22 $m^2/g$ (sold by ICI, Runcorn, U.K.); 11.1 parts of a stearate surface treated ground calcium carbonate (Gamasperse (R) CS-11), 1.11 parts of gamma-glycidoxypropyltrimethoxysilane; 0.22 part of dimethyltin bis-neodecanoate and the kind and amount of crosslinker as shown in Table 8. The silicone sealant compositions were cured and tested as described in Example 1 and the results obtained are shown in Table 8.

TABLE 8

| SAMPLE | CROSSLINKER | | | | INITIAL PROPERTIES | | | | PROPERTIES AFTER OIL IMMERSION | | | | |
|---|---|---|---|---|---|---|---|---|---|---|---|---|---|
| | PARTS VTO* | PARTS MTO | PARTS MTMO | TFT min. | TENSILE STRENGTH kPa | ELONG-ATION % | DUROM-ETER SHORE A | 100% MODULUS kPa | TENSILE STRENGTH kPa | ELONG-ATION % | DUROM-ETER SHORE A | 100% MODULUS kPa | SWELL % |
| T*** | 15.5 | 0 | 0 | 40 | 1786 | 622 | 30 | 531 | 1655 | 367 | 15 | 517 | 34 |
| U | 11.1 | 4.44 | 0 | 40 | 1896 | 582 | 32 | 552 | 1662 | 346 | 16 | 545 | 31 |
| V | 6.66 | 8.88 | 0 | 50 | 1744 | 557 | 31 | 545 | 1427 | 433 | 14 | 476 | 30 |
| W | 6.66 | 0 | 8.88 | 45 | 1993 | 582 | 31 | 565 | 1565 | 432 | 16 | 517 | 29 |
| X | 2.2 | 13.3 | 0 | 70 | 1793 | 544 | 31 | 572 | 1572 | 471 | 16 | 503 | 28 |
| Y+++ | 5.9 | 7.9 | 0 | 50 | 1703 | 485 | 35 | 648 | 1710 | 378 | 18 | 593 | 32 |
| Z*** | 0 | 15.5 | 0 | 105 | 1855 | 577 | 31 | 558 | 1737 | 412 | 19 | 593 | 26 |

* VTO = vinyltri(methylethylketoximo)silane
*** Comparative example
+++ The amounts of the ingredients varied from the other compositions in this example and were as follows: 0.0 parts of trimethylsiloxy terminated polydimethylsiloxane, 0.99 part of gamma-glycidoxypropyltrimethoxysilane, 0.20 part of dimethyltin bis-neodecanoate, 73.4 parts of the precipitated calcium carbonate, and 9.9 parts of the ground calcium carbonate.

Samples U, V, W, X, and Y illustrated variations of crosslinker combinations which provided reduced percentage

swell in hot hydrocarbon oil compared to Sample T, while also maintaining an acceptable TFT. However, when the crosslinker combination was not used, higher percentage swell was obtained and unacceptably high TFT resulted.

## Claims

1. A method of reducing hot hydrocarbon oil swell of silicone sealant gaskets comprising

(I) forming a gasket shape from a silicone sealant composition consisting of a blend of the following ingredients with the proviso that the blend excludes amino functional silicon compounds,
(A) 100 parts by weight of a polydimethylsiloxane having a viscosity measured at 25°C. of from 1 Pa·s to 300 Pa·s, and endblocking selected from silicon-bonded hydroxyl groups or a mixture of silicon-bonded hydroxyl groups and trimethylsiloxy units,
(B) 25 to 200 parts by weight, based on 100 parts by weight of (A), of a filler consisting of 25 to 200 parts by weight of calcium carbonate and 0 to 25 parts by weight of reinforcing silica,
(C) 5 to 25 parts by weight, based on 100 parts by weight of (A), of a crosslinker selected from the group consisting of
(a) a combination of 10 to 75 weight percent of vinyltriketoximosilane and 25 to 90 weight percent of methyltriketoximosilane where the combined weight of vinyltriketoximosilane and methyltriketoximosilane is 100 weight percent;
(b) a combination of 25 to 90 weight percent of vinyltriketoximosilane and 10 to 75 weight percent of tetraketoximosilane where the combined weight of vinyltriketoximosilane and tetraketoximosilane is 100 weight percent;
(c) a combination of 25 to 90 weight percent of vinyltriketoximosilane, and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane where the combined weight of vinyltriketoximosilane and the tetrafunctional ethoxyketoximosilane mixture is 100 weight percent;
(d) a combination of 25 to 90 weight percent of methyltriketoximosilane and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane and 0 to 59 weight percent of tetraketoximosilane where the combined weight of methyltriketoximosilane and the tetrafunctional ethoxyketoximosilane mixture is 100 weight percent;
(e) a combination of vinyltriketoximosilane, methyltriketoximosilane, and a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane, where the methyltriketoximosilane is present in an amount of from 25 to 90 weight percent, and the remainder of the combination is at least 1 weight percent vinyltriketoximosilane and at least 1 weight percent of the tetrafunctional ethoxyketoximosilane mixture where the combined weight of vinyltriketoximosilane, methyltriketoximosilane, and the tetrafunctional ethoxyketoximosilane is 100 weight percent;
(f) a combination of 10 to 75 weight percent of vinyltriketoximosilane and 25 to 90 weight percent of a methyltri(methoxyketoximo)silane mixture consisting of 50 to 90 weight percent methyltriketoximosilane and 10 to 50 weight percent of methylmonomethoxydiketoximosilane, where the combined weight of vinyltriketoximosilane and the methyltri(methoxyketoximo)silane mixture is 100 weight percent;
(g) a combination of 10 to 75 weight percent of tetraketoximosilane and 25 to 90 weight percent of a methyltri(methoxyketoximo)silane mixture consisting of 50 to 90 weight percent of methyltriketoximosilane and 10 to 50 weight percent of methylmonomethoxydiketoximosilane, where the combined weight of the tetraketoximosilane and the methyltri(methoxyketoximo)silane mixture is 100 weight percent;
(h) a combination of 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane, and 25 to 90 weight percent of a methyltri(methoxyketoximo)silane mixture consisting essentially of 50 to 90 weight percent methyltriketoximosilane and 10 to 50 weight percent of methylmonomethoxydiketoximosilane, where the combined weight of the tetrafunctional ethoxyketoximosilane mixture and the methyltri(methoxyketoximo)silane mixture is 100 weight percent;
(i) a combination of 25 to 90 weight percent of methyltriketoximosilane and 10 to 75 weight percent of a vinyltri(methoxyketoximo)silane mixture consisting of 50 to 90 weight percent vinyltriketoximosilane and 10 to 50 weight percent vinylmonomethoxydiketoximosilane and where the combined weight of the methyltriketoximosilane and the vinyltri(methoxyketoximo)silane mixture is 100 weight percent;
(j) a combination of 10 to 75 weight percent of tetraketoximosilane and 25 to 90 weight percent of a vinyltri (methoxyketoximo)silane mixture consisting of 50 to 90 weight percent vinyltriketoximosilane and 10 to 50 weight percent of vinylmonomethoxydiketoximosilane and where the combined weight of the tetraketoximosilane and the vinyltri-(methoxyketoximo)silane mixture is 100 weight percent;
(k) a combination of 25 to 90 weight percent of a vinyltri(methoxyketoximo)silane mixture consisting of 10 to 50 weight percent vinylmonomethoxydiketoximosilane and 50 to 90 weight percent vinyltriketoximosilane and 10 to 75 weight percent of a tetrafunctional ethoxyketoximosilane mixture consisting of 20 to 70 weight percent of monoethoxytriketoximosilane, 20 to 60 weight percent of diethoxydiketoximosilane, 1 to 20 weight percent of triethoxymonoketoximosilane, and 0 to 59 weight percent of tetraketoximosilane, where the combined weight of the vinyltri-(methoxy ketoximo)silane and the tetrafunctional ethoxyketoximosilane mixture is 100 weight percent; and
(l) a combination of 10 to 75 weight percent of a vinyltri(methoxyketoximo)silane mixture consisting of 10 to 50 weight percent of vinylmonomethoxydiketoximosilane and 50 to 90 weight percent of vinyltriketoximosilane, and 25 to 90 weight percent of a methyltri(methoxyketoximo)silane mixture consisting of 50 to 90 weight percent of methyltriketoximosilane and 10 to 50 weight percent methylmonomethoxydiketoximosilane, where the combined weight of the vinyltri-(methoxyketoximo)silane mixture and the tetrafunctional ethoxyketoximosilane mixture is 100 weight percent;
(D) a catalytic quantity of a catalyst for curing a mixture of (A), (B) and (C) in an atmosphere containing moisture;
(E) 0 to 25 parts by weight per 100 parts by weight of (A) of a trimethylsiloxy endblocked polydimethylsiloxane fluid having a viscosity measured at 25°C. of from 0.01 to 100 Pa·s;
(F) optionally a quantity of one or more of an additive selected from the group consisting of thermal aging enhancer, a colorant, a flame retardant enhancer, a filler other than calcium carbonate and reinforcing silica, and an adhesion promoter, and said additives do not reduce the hydrocarbon oil resistance ; and
(G) 0 to 25 parts by weight per 100 parts by weight of (A) of a hydroxyl endblocked polydiorganosiloxane having a viscosity measured at 25°C. of less than 0.1 Pa·s and where the organo groups are methyl or a mixture of methyl and phenyl;
(II) exposing the silicone sealant composition in the shape of a gasket to moisture, curing the silicone sealant composition, and forming a cured silicone sealant gasket, wherein the curing gasket has a tack-free-time of less than 100 minutes, and the cured silicone sealant gasket has a reduced swell in hot hydrocarbon oils compared to a gasket made from an equivalent composition formulated with vinyltriketoximosilane as the sole crosslinker.

**2.** The method in accordance with claim 1 in which filler (B) is present in an amount of 65 to 105 parts by weight where 60 to 90 parts by weight is calcium carbonate and 5 to 15 parts by weight is reinforcing silica.

**3.** The method in accordance with claim 1 in which the polydimethylsiloxane (E) is present in an amount of from 5 to 25 parts by weight per 100 parts by weight of (A).

**4.** The method in accordance with claim 3 in which the additive (F) is gamma-glycidoxypropyltrimethoxysilane and is present in an amount of from 0.1 to 2 parts by weight per 100 parts by weight of (A).

**5.** The method in accordance with claim 1 in which catalyst (D) is a tin catalyst.

**6.** The method in accordance with claim 1 in which crosslinker (C) is combination (a) and in which the-amount of the ingredients in combination (a) are 40 to 60 weight percent of the vinyltriketoximosilane and 60 to 40 weight percent of the methyltriketoximosilane and the combined weight percent of vinyltriketoximosilane and methyltriketoximosilane equals 100 weight percent of the combination.

**7.** The method in accordance with claim 1 in which the crosslinker (C) is combination (f) and in which the amounts of the ingredients in combination (f) are 30 to 50 weight percent of the vinyltriketoximosilane and 70 to 50 weight percent of the methyltri(methoxyketoximo)silane mixture and the combined weight percent of vinyltriketoximosilane and the methyltri(methoxyketoximo)silane mixture equals 100 weight percent.

**8.** The method in accordance with claim 7 in which filler (B) is calcium carbonate and is present in an amount of from 70 to 125 parts by weight.

**9.** The method in accordance with claim 1 in which the crosslinker (C) is combination (b) and in which the amount of

the ingredients in combination (b) are 25 to 40 weight percent of vinyltriketoximosilane and 60 to 75 weight percent of the tetraketoximosilane and the combined weight of vinyltriketoximosilane and tetraketoximosilane is 100 weight percent.

**10.** The method in accordance with claim 9 in which filler (B) is present in an amount of 65 to 120 parts by weight where 60 to 100 parts by weight is calcium carbonate and 5 to 20 parts by weight is reinforcing silica.

**11.** The method in accordance with claim 1 in which the crosslinker (C) is combination (c) and in which the amount of the ingredients in combination (c) are 30 to 50 weight percent of vinyltriketoximosilane and 70 to 50 weight percent of the tetrafunctional ethoxyketoximosilane mixture and the combined weight of vinyltriketoximosilane and the tetrafunctional ethoxyketoximosilane mixture equals 100 weight percent.

**12.** The method in accordance with claim 1 in which the crosslinker (C) is combination (h) in which the amount of the ingredients in combination (h) are 30 to 50 weight percent of the methyltri(methoxyketoximo)silane mixture and 70 to 50 weight percent of the tetrafunctional ethoxyketoximosilane mixture and the combined weight of the methyltri(methoxyketoximo)silane mixture and the tetrafunctional ethoxyketoximosilane mixture is 100 weight percent.

**13.** The method in accordance with claim 12 in which filler (B) is present in an amount of 65 to 130 parts by weight where 60 to 110 parts by weight is calcium carbonate and 5 to 20 parts by weight is reinforcing silica.

**14.** The method in accordance with claim 1 in which the silicone sealant composition is formed into a gasket shape in step (I) and placed between at least two substrates forming a seal which comes into contact with hot hydrocarbon oil during its function as a gasket.

European Patent Office

# EUROPEAN SEARCH REPORT

Application Number
EP 95 30 8487

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 261 418 (TORAY)<br>* page 5, line 3 - line 8; claim 1; example 2 *<br>&US5013781(D)<br>* page 3, line 23 - page 4, line 43 *<br>--- | 1-8, 11-14 | C08L83/04<br>C08K5/54 |
| X,D | US-A-4 657 967 (KLOSOWSKI ET AL)<br>* claim 26; example 2 *<br>--- | 1,2,4, 12-14 | |
| X | EP-A-0 599 616 (GENERAL ELECTRIC)<br>* claims 1,7 *<br>--- | 1-3,5-8 | |
| A,D | US-A-4 514 529 (BEERS ET AL)<br>* column 4, line 56 - column 5, line 41 *<br>----- | 1 | |

TECHNICAL FIELDS SEARCHED (Int.Cl.6)
C08L
C08K

The present search report has been drawn up for all claims

| Place of search | Date of completion of the search | Examiner |
|---|---|---|
| THE HAGUE | 11 April 1996 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)